# EUROPÄISCHE PATENTSCHRIFT

(11) **EP 2 465 708 B1**
(45) Veröffentlichungstag und Bekanntmachung des Hinweises auf die Patenterteilung: **13.08.2014**
(21) Anmeldenummer: 11188762.6
(22) Anmeldetag: 11.11.2011
(51) Int. Cl.: B60C 11/12

(54) **Fahrzeugluftreifen**
Pneumatic tyre for a vehicle
Pneu de véhicule

(30) Priorität: 20.12.2010 DE 102010061373
(43) Veröffentlichungstag der Anmeldung: 20.06.2012
(73) Patentinhaber: Continental Reifen Deutschland GmbH, 30165 Hannover (DE)
(72) Erfinder: Diensthuber, Franz, 30559 Hannover (DE); Vermehr, Ulrich, 30163 Hannover (DE); Schlittenhard, Jan, 30900 Wedemark (DE)
(74) Vertreter: Finger, Karsten

(56) Entgegenhaltungen:
- WO-A1-2009/077807
- DE-A1-102009 051 278
- JP-A- 11 208 221
- JP-A- 2000 177 329

## Beschreibung

Die Erfindung betrifft einen Fahrzeugluftreifen, insbesondere für den Einsatz unter winterlichen Fahrbedingungen, mit einem Laufstreifen mit zumindest einer in Umfangsrichtung umlaufenden und Profilblöcke aufweisenden Profilblockreihe, welche von zumindest einer Umfangsrille begrenzt ist und deren Profilblöcke jeweils mit einer Anzahl von zumindest im Wesentlichen in Laufstreifenquerrichtung verlaufenden Einschnitten geringer Breite versehen sind, welche, *in axialer Richtung betrachtet,* jeweils einen *in radialer Richtung* tieferen Abschnitt und an diesen anschließend zumindest einen an einer Blockflanke in eine Umfangsrille mündenden, *in radialer Richtung* seichteren Randabschnitt aufweisen.

Es ist bekannt und üblich, Fahrzeugluftreifen, die für den Einsatz unter winterlichen Fahrbedingungen vorgesehen sind, mit Profilblöcken im Laufstreifen zu versehen, die jeweils eine Anzahl von Einschnitten mit einer Breite zwischen 0,4 mm und 0,6 mm aufweisen. Diese Einschnitte können auf unterschiedliche Weise ausgeführt sein. Es ist beispielsweise bekannt, in Draufsicht wellen-, zickzackförmig oder gerade verlaufende Einschnitte vorzusehen oder Einschnitte mit einer Kombination aus geraden, zickzack- oder wellenförmigen Abschnitten zu versehen. Aus der EP 0 125 437 A1 ist es bekannt, in Draufsicht gewellt oder zickzackförmig verlaufende Einschnitte derart auszuführen, dass sie am Einschnittgrund eine kleinere Amplitude aufweisen als auf der Profilblockoberfläche.

Aus der JP 2000 177 329 A ist ein gattungsgemäßer Fahrzeugluftreifen mit einem Laufstreifen mit einer Vielzahl von Profilblöcken bekannt, die jeweils mit einer Anzahl von Einschnitten versehen sind. Die Einschnitte sind in radialer Richtung gewellt bzw. zickzackförmig ausgeführt, sodass ihre Wellenberge und Wellentäler in axialer Richtung orientiert sind. Die Wellenberge und Wellentäler nahe der Laufstreifenobeifläche weisen eine größere Amplitude - eine größere Höhe bzw. Tiefe - auf, als jene, die sich nahe des Einschnittgrundes befinden. Durch diese Maßnahme soll bei zunehmendem Abrieb eine zufriedenstellende Performance des Reifens auf Schnee und Eis sichergestellt sein.

Die Einschnitte in den Profilpositiven des Laufstreifens öffnen sich beim Aufbringen einer Umfangskraft im Latschdurchgang und bilden dadurch Griffkanten, die sich im komprimierten Schnee abstützen können und derart eine gute Kraftübertragung beim Bremsen und Beschleunigen des Fahrzeuges ermöglichen. Dieser Kanteneffekt ist ein wesentlicher Bestandteil des Griffpotentials eines Reifens. Darüber hinaus bewirken die Einschnitte beim Einfederungsprozess des Reifens während des Latschdurchganges eine erhöhte radiale Verformung der Profilpositive bzw. Profilblöcke. Diese macht sich durch ein seitliches Ausbauchen der Profilblöcke bei den Umfangsrillen bemerkbar und kann negative Auswirkungen auf den Abrieb, das Aquaplaningverhalten und den Rollwiderstand zeigen. Insbesondere in schmäleren Profilbändern oder Profilblockreihen werden die Einschnitte mit Randabschnitten versehen, die weniger tief ausgeführt sind, als der zwischen ihnen befindliche mittlere Einschnittabschnitt. Diese Randabschnitte können unterschiedlich tief ausgeführt sein, wodurch ein "balliges" Abreiben der Profilblöcke reduziert wird, welches bei gleich tiefen Randabschnitten auftreten kann.

Der Erfindung liegt die Aufgabe zugrunde, Einschnitte im Laufstreifen von Reifen derart auszuführen, dass das oben erwähnte seitliche Ausbauchen der Profilblöcke verhindert bzw. deutlich reduziert wird.

Gelöst wird die gestellte Aufgabe erfindungsgemäß dadurch, dass der Randabschnitt von Wandabschnitten begrenzt ist, welche eine Wellenform aufweisen, deren Wellenberg(e) und Wellental bzw. Wellentäler in axialer Richtung verlaufen und eine *in axialer Richtung und damit in Richtung* zum tieferen Abschnitt abnehmende, insbesondere verschwindende Amplitude aufweisen.

Durch diese spezielle wellenförmige Ausführung der Wandabschnitte in zumindest einem Randabschnitt mit einer von der Blockflanke in Richtung zum mittleren tieferen Abschnitt abnehmenden Amplitude wird der Profilblockrandbereich in radialer Richtung besonders vorteilhaft versteift, sodass das Einfedern und somit die Blockverformung in diesem Bereich reduziert werden. Der Profilblock erhält daher eine gleichmäßigere radiale Steifigkeit, wodurch das Abriebsbild infolge einer gleichmäßigeren Flächenpressung positiv beeinflusst wird. Die gleichmäßige Flächenpressung bewirkt zusätzlich eine Verbesserung der Wintereigenschaften, da die übertragbare Reibkraft sowohl von den großflächigen als auch von den lokalen Flächenpressungen in der Bodenaufstandsfläche, im Latsch, beeinflusst wird. Bereiche mit geringer Flächenpressung im Latsch könnten nicht so hohe Reibkräfte übertragen und dadurch Schlupf bewirken, wodurch die maximal übertragbare Reibkraft reduziert wäre. Die erhöhte radiale Steifigkeit der Profilblöcke reduziert ferner die unerwünschte Nutverengung, die bei einem seitlichen Ausbauchen der Profilblöcke im Latschdurchlauf erfolgen würde, sodass auch das Aquaplaning und die Schnee-Matsch-Eigenschaften des Reifens verbessert werden. Die reduzierte radiale Beweglichkeit der Profilblöcke im Latschdurchgang beeinflusst auch den Rollwiderstand des Reifens auf positive Weise. Durch die vom Randbereich zum mittleren Abschnitt in axialer Richtung hin abnehmende Amplitude der Wellenform wird die Versteifungswirkung in Richtung zur steiferen Blockmitte hin reduziert und somit eine besonders gute und effektive Öffnung des mittleren Einschnittabschnittes erreicht, wodurch die Wintereigenschaften des Reifens verbessert werden. Darüber hinaus bewirkt der spezielle Wellenverlauf des/der Randabschnitte(s) eine besondere Abstützung der durch die Einschnitte voneinander getrennten Profilblockelemente, derart, dass eine höhere Lateralkraft übertragen werden kann, was für die Handlingeigenschaften auf allen Untergründen von Vorteil ist.

Je nach der Ausführung der Einschnitte lässt sich die radiale Steifigkeit der Profilblöcke auf unterschiedliche Weise beeinflussen. Bei einer möglichen Ausführungsvariante der Erfindung durchqueren die erfindungsgemäß ausgeführten Einschnitte die Profilblöcke und weisen zwei gleich tiefe Randabschnitte mit Wandabschnitten in Wellenform auf. Bei einer alternativen Ausführungsform der Erfindung sind die Einschnitte, welche die Profilblöcke durchqueren, mit zwei unterschiedlich tiefen Randabschnitten versehen. Bei dieser Ausführungsform ist es von Vorteil, wenn der tiefere Randabschnitt mit Wandabschnitten gemäß der Erfindung, demnach in Wellenform, versehen ist.

Für eine optimale Versteifungswirkung ist es von Vorteil, wenn die Amplitude der Wellenform, an der die Umfangsrille begrenzenden Blockflanke ermittelt, 0,5 mm bis 2 mm und wenn die Wellenlänge der Wellenform 2 mm bis 6 mm beträgt. Für den Abstützungseffekt zwischen den von den Einschnitten begrenzten Profilblockelementen ist es vorteilhaft, wenn die Wellenform über zumindest eine Wellenlänge ausgebildet und ein Vielfaches einer halben Wellenlänge ist.

Erfindungsgemäß ausgeführte Einschnitte können im tieferen Einschnittabschnitt von Wandabschnitten begrenzt sein, welche eine Wellen- oder Zickzackform aufweisen, deren Wellenberg(e) und Wellental bzw. Wellentäler in radialer Richtung verlaufen. Mit dieser Maßnahme lässt sich die Quersteifigkeit der Profilblöcke auf vorteilhafte Weise beeinflussen. Die Wellen- bzw. Zickzackform kann nun derart ausgeführt sein, dass die Amplitude zum Grund des Einschnittabschnittes abnimmt, wobei die Amplitude am Einschnittgrund auch Null sein kann. Alternativ ist eine Ausführungsform möglich, bei der die Amplitude der Wellen- bzw. Zickzackform konstant ist. Die Amplitude der Wellenform an der Profilblockoberseite beträgt insbesondere zwischen 1,5 mm und 3,5 mm, die Wellenlänge der Wellenform zwischen 3 mm und 7 mm. Dabei wird die Wellenform über zumindest eine Wellenlänge ausgebildet.

Weitere Merkmale, Vorteile und Einzelheiten der Erfindung werden nun anhand der schematischen Zeichnung, die Ausführungsbeispiele der Erfindung darstellt, näher beschrieben. Dabei zeigen,
Fig. 1 eine Draufsicht auf einige Profilblöcke eines Laufstreifens eines Fahrzeugluftreifens,
Fig. 2 einen entlang eines Einschnittes aufgeschnittenen Profilblock, in der durch die beiden Pfeile A in Fig. 1 gekennzeichneten Ansicht,
Fig. 3 eine Ansicht auf einen Teil eines Profilblockes aus Fig. 1 gemäß den Pfeilen B aus Fig. 1,
Fig. 4 eine Draufsicht auf einige Profilblöcke eines Laufstreifens eines Fahrzeugluftreifens mit einer weiteren Ausführungsvariante der Erfindung und
Fig. 5 einen entlang eines Einschnittes aufgeschnittenen Profilblock aus Fig. 4, in der durch die Pfeile C in Fig. 4 gekennzeichneten Ansicht.

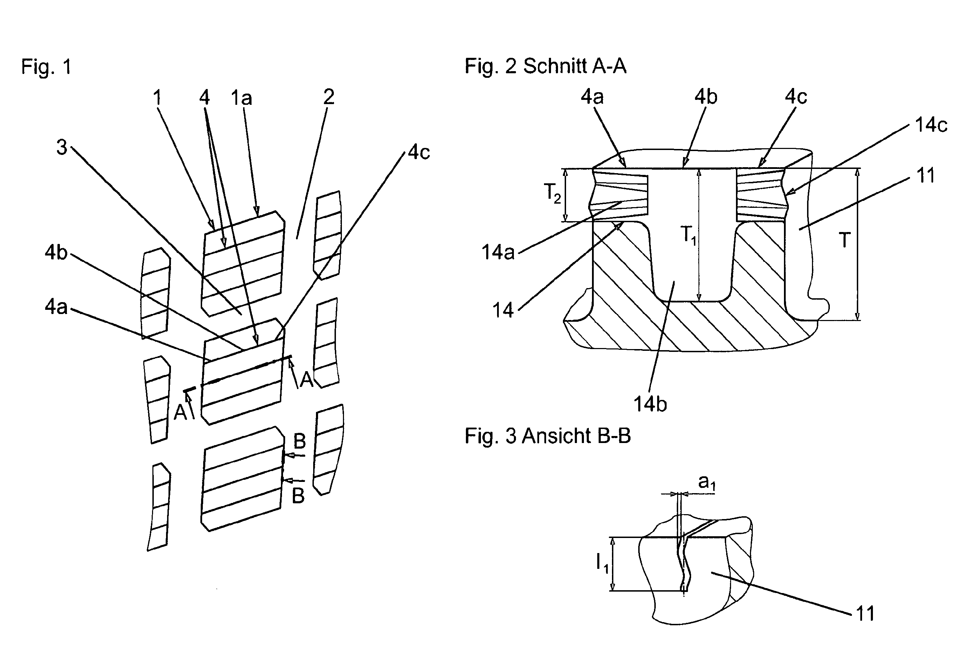

Fig. 1 zeigt beispielhaft und schematisch Profilblöcke 1 eines Laufstreifens eines Fahrzeugluftreifens, welcher ein insbesondere für den Einsatz unter winterlichen Fahrbedingungen geeigneter Reifen für Personenkraftwagen ist. Die drei komplett dargestellten Profilblöcke 1 gehören zu einer in Umfangsrichtung verlaufenden Profilblockreihe 1a, welche durch Umfangsrillen 2 von weiteren Profilpositiven, beispielsweise ebenfalls Profilblockreihen, getrennt ist. Die Profilblöcke 1 der Profilblockreihe 1a sind voneinander durch Quernuten 3 getrennt, in Draufsicht im Wesentlichen parallelogrammförmig und jeweils mit einer Anzahl von Einschnitten 4 versehen, welche eine insbesondere konstante Breite aufweisen, die zwischen 0,4 mm und 0,6 mm beträgt. Bei der dargestellten Ausführungsform sind pro Profilblock 1 drei Einschnitte 4 vorgesehen, welche jeweils parallel zueinander und zumindest im Wesentlichen parallel zu den Quernuten 3 verlaufen und deren gegenseitiger Abstand sowie deren Abstände zu den Quernuten 3 im Wesentlichen übereinstimmen. Bei neuem Reifen sind die Einschnitte 4 in Draufsicht auf die Profilblöcke 1 als gerade verlaufende Einschnitte zu sehen.

Fig. 2 zeigt einen Schnitt durch einen Profilblock 1 entlang eines Einschnittes 4 und eine Ansicht einer Einschnittwand 14. Die gegenüberliegende Einschnittwand, welche nicht gezeigt ist, befindet sich von der gezeigten Einschnittwand 14 in einem Abstand, welcher der Breite des Einschnittes 4 entspricht, und ist zur Einschnittwand 14 übereinstimmend ausgeführt. Der Einschnitt 4 besteht somit aus zwei Randabschnitten 4a, 4c und einem mittleren Einschnittabschnitt 4b, welcher bis in eine Tiefe T₁ reicht, die mindestens 65 % der Profiltiefe T beträgt - dies ist die Tiefe der Umfangsrille 2 - und maximal der Profiltiefe T entspricht. Die beiden Randabschnitte 4a und 4c sind bei der in Fig. 2 gezeigten Ausführungsform gleich tief ausgeführt und reichen bis in eine Tiefe T₂, welche geringer ist als T₁ und insbesondere zwischen 20 % und 60 % der Profiltiefe T beträgt. Je nach Profilausgestaltung und Ausgestaltung der Profilblöcke 1 kann einer der beiden Randabschnitte 4a, 4c eine geringere Tiefe als der andere aufweisen und insbesondere bis auf etwa 20 % der Profiltiefe T reichen. Der tiefere Randabschnitt reicht insbesondere zumindest bis in eine Tiefe von 40% der Profiltiefe. Die Übergänge zwischen dem mittleren Abschnitt 4b und den beiden Randabschnitten 4a, 4c erfolgen in bekannter Weise über steile, nahezu in radialer Richtung verlaufende Übergangsflanken mit Übergangsrundungen. Der mittlere Abschnitt 4b des Einschnittes 4 verläuft über 30 % bis 80 % der Längserstreckung des Einschnittes 4 im Profilblock 1, die beiden Randabschnitte 4a, 4c insbesondere jeweils über die Hälfte der verbleibenden Längserstreckung, wobei die Randabschnitte 4a, 4c auch unterschiedliche Längen aufweisen können. Wie insbesondere Fig. 2 in Verbindung mit Fig. 3 zeigt, ist der Einschnitt 4 im mittleren Einschnittabschnitt 4b durch Wandabschnitte 14b begrenzt, die in radialer Richtung verlaufende ebene Flächen sind. Die Wandabschnitte 14a, 14c in den Randabschnitten 4a, 4c weisen in radialer Richtung eine Wellenform mit zumindest einem Wellenberg und einem Wellental auf, derart, dass der/die Wellenberg(e) und das Wellental bzw. die Wellentäler in axialer Richtung bzw. parallel zur Profilblockoberfläche verlaufen. An den Blockflanken 11 beträgt die Amplitude a₁ der Wellenform zwischen 0,5 mm und 2 mm, insbesondere etwa 1 mm, die Wellenlänge l₁ richtet sich nach der radialen Erstreckung des Einschnittabschnittes 4a bzw. 4c und beträgt zwischen 2 mm und 6 mm. Über die vorgesehene radiale Erstreckung der Wandabschnitte 14a bzw. 14c umfasst die Wellenform insbesondere zumindest eine Wellenlänge l₁ bzw. das 1,5-Fache der Wellenlänge l₁. Wie gezeigt, weist die Wellenform an der Blockflanke 11 eine konstante Amplitude a₁ und eine konstante Wellenlänge l₁ auf. In Richtung zum mittleren Einschnittabschnitt 4b bzw. zum mittleren Wandabschnitt 14b nimmt die Amplitude a₁ der Wellenform kontinuierlich ab, bis auf den Wert Null, sodass an der Grenze zwischen den Wandabschnitten 14a/14b bzw. 14c/14b keine Wellenform mehr vorliegt, wie es in Fig. 2 gezeigt ist.

Sind die Randabschnitte 4a, 4c unterschiedlich tief ausgeführt ist die beschriebene Wellenform vorzugsweise nur im tieferen Randabschnitt ausgebildet.

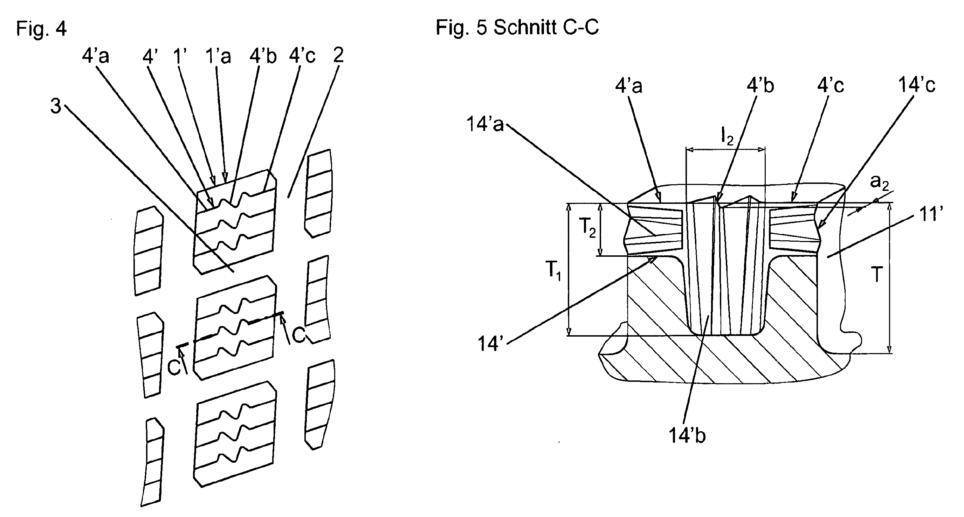

Fig. 4 und Fig. 5 zeigen eine weitere Ausführungsform der Erfindung. Fig. 4 zeigt eine Draufsicht auf einige Profilblöcke 1' einer Profilblockreihe 1'a in zu Fig. 1 analoger Darstellung. Die durch Umfangsrillen 2 von benachbarten Profilpositiven getrennten Profilblöcke 1 weisen jeweils drei Einschnitte 4' auf, welche zueinander und zu den Quernuten 3 parallel bzw. im Wesentlichen parallel verlaufen. Die Einschnitte 4' weisen ebenfalls drei Einschnittabschnitte 4'a, 4'b, 4'c auf, wobei die Einschnittabschnitte 4'a und 4'c analog zu den Einschnittabschnitten 4a und 4c der ersten Ausführungsform ausgeführt sind, ihre Wandabschnitte 14'a und 14'c weisen die beschriebenen Wellenform mit der Amplitude a₁ und der Wellenlänge l₁ an den Blockflanken 11 auf. Im mittleren Einschnittabschnitt 4'b weisen die Einschnittwände 14'b entweder eine Wellenform oder eine Zickzackform auf, die jeweils zumindest über eine komplette Wellenlänge l₁ verläuft und insbesondere ein Vielfaches einer halben Wellenlänge (ein Wellenberg/ein Wellental der Wellen- oder Zickzackform) ist. Die Wellenberge und Wellentäler erstrecken sich in radialer Richtung, ihre Höhe wird in Richtung Einschnittgrund kontinuierlich geringer, sodass am Einschnittgrund die Amplitude a₂ auf Null abgenommen hat und keine Wellenform mehr vorliegt. An der Profiloberfläche und bei neuem Reifen beträgt die Wellenlänge l₂ zwischen 3 mm und 7 mm, die Amplitude a₂ zwischen 1,5 mm und 3,5 mm. Bei einer alternativen, nicht gezeigten Ausführungsform kann die Amplitude der Wellen- bzw. Zickzackform in radialer Richtung bis zum Grund des Einschnittabschnittes konstant bleiben.

Die Erfindung ist auf die dargestellten und beschriebenen Ausführungsformen nicht eingeschränkt. Erfindungsgemäß ausgeführte Einschnitte können auch in schulterseitigen Profilblöcken vorgesehen sein und einen in eine Umfangsrille mündenden Randabschnitt aufweisen, welcher gemäß der Erfindung ausgeführt ist.

### Bezugszeichenliste

- 1, 1': Profilblock
- 1a, 1'a: Profilblockreihe
- 2: Umfangsrille
- 3: Quernut
- 4: Einschnitt
- 4a, 4'a: Randabschnitt
- 4b, 4'b: mittlerer Abschnitt
- 4c, 4'c: Randabschnitt
- 11: Blockflanke
- 14, 14': Einschnittwand
- 14a, 14'a: Wandabschnitt
- 14b, 14'b: Wandabschnitt
- 14c, 14'c: Wandabschnitt
- T: Profiltiefe
- T₁: Tiefe
- T₂: Tiefe
- a₁: Amplitude
- a₂: Amplitude
- l₁: Wellenlänge
- l₂: Wellenlänge

## Patentansprüche

1. Fahrzeugluftreifen, insbesondere für den Einsatz unter winterlichen Fahrbedingungen, mit einem Laufstreifen mit zumindest einer in Umfangsrichtung umlaufenden und Profilblöcke (1, 1') aufweisenden Profilblockreihe (1a, 1'a), welche von zumindest einer Umfangsrille (2) begrenzt ist und deren Profilblöcke (1, 1') jeweils mit einer Anzahl von zumindest im Wesentlichen in Laufstreifenquerrichtung verlaufenden Einschnitten (4) geringer Breite versehen sind, welche, *in axialer Richtung betrachtet,* jeweils einen *in radialer Richtung* tieferen Abschnitt (4b, 4'b) und an diesen anschließend zumindest einen an einer Blockflanke (11) in eine Umfangsrille (2) mündenden, *in radialer Richtung* seichteren Randabschnitt (4a, 4c, 4'a, 4'c) aufweisen,
**dadurch gekennzeichnet,**
***dass*** der Randabschnitt (4a, 4c, 4'a, 4'c) von Wandabschnitten (14a, 14c, 14'a, 14'c) begrenzt ist, welche eine Wellenform aufweisen, deren Wellenberg(e) und/bzw. Wellental bzw. Wellentäler in axialer Richtung verlaufen und eine *in axialer Richtung und damit in Richtung* tieferen Abschnitt (4b, 4'b) abnehmende, insbesondere verschwindende Amplitude (a₁) aufweisen.

2. Fahrzeugluftreifen nach Anspruch 1, **dadurch gekennzeichnet, dass** die Einschnitte (4, 4') die Profilblöcke (1, 1') durchqueren und zwei gleich tiefe Randabschnitte (4a, 4c, 4'a, 4'c) mit Wandabschnitten (14a, 14c, 14'a, 14'c) in Wellenform aufweisen.

3. Fahrzeugluftreifen nach Anspruch 1, **dadurch gekennzeichnet, dass** die Einschnitte die Profilblöcke durchqueren und zwei unterschiedlich tiefe Randabschnitte aufweisen, wobei der tiefere Randabschnitt mit Wandabschnitten in Wellenform versehen ist.

4. Fahrzeugluftreifen nach einem der Ansprüche 1 bis 3, **dadurch gekennzeichnet, dass** die Amplitude (a₁) der Wellenform an der die Umfangsrille (2) begrenzenden Blockflanke (11) 0,5 mm bis 2 mm beträgt.

5. Fahrzeugluftreifen nach einem der Ansprüche 1 bis 4, **dadurch gekennzeichnet, dass** die Wellenlänge (l₁) der Wellenform 2 mm bis 6 mm beträgt.

6. Fahrzeugluftreifen nach einem der Ansprüche 1 bis 5, **dadurch gekennzeichnet, dass** die Wellenform über zumindest eine Wellenlänge (1₁) ausgebildet und ein Vielfaches einer halben Wellenlänge (1₁) ist.

7. Fahrzeugluftreifen nach Anspruch 1, **dadurch gekennzeichnet, dass** der tiefere Einschnittabschnitt (4b, 4'b) von Wandabschnitten (14b, 14'b) begrenzt ist, welche eine Wellen- oder Zickzackform aufweisen, deren Wellenberg(e) und Wellental bzw. Wellentäler in radialer Richtung verlaufen.

8. Fahrzeugluftreifen nach Anspruch 7, **dadurch gekennzeichnet, dass** die Amplitude (a₂) der Wellen- bzw. Zickzackform zum Grund des Einschnittabschnittes (4b, 4'b) abnimmt, insbesondere derart, dass sie am Einschnittgrund Null ist.

9. Fahrzeugluftreifen nach Anspruch 7, **dadurch gekennzeichnet, dass** die Amplitude (a₂) der Wellen- bzw. Zickzackform zwischen der Profilblockoberseite und dem Grund des Einschnittabschnittes (4b, 4'b) konstant ist.

10. Fahrzeugluftreifen nach Anspruch 8 oder 9, **dadurch gekennzeichnet, dass** die Amplitude (a₂) der Wellenform an der Profilblockoberseite 1,5 mm bis 3,5 mm beträgt.

11. Fahrzeugluftreifen nach Anspruch 8 oder 9, **dadurch gekennzeichnet, dass** die Wellenlänge (l₂) der Wellenform 3 mm bis 7 mm beträgt.

12. Fahrzeugluftreifen nach einem der Ansprüche 7 bis 11, **dadurch gekennzeichnet, dass** die Wellenform über zumindest eine Wellenlänge (1₂) ausgebildet ist.

## Claims

1. Pneumatic vehicle tyre, in particular for use in winter driving conditions, with a tread strip having at least one row of profile blocks (1a, 1'a), which runs around in the circumferential direction, comprises profile blocks (1, 1') and is bounded by at least one circumferential channel (2), and the profile blocks (1, 1') of which are respectively provided with a number of sipes (4) of small width, which run at least substantially in the transverse direction of the tread strip and, when considered in the axial direction, have in each case a deeper portion (4b, 4'b) in the radial direction and, adjoining thereto, at least one shallower peripheral portion (4a, 4c, 4'a, 4'c) in the radial direction, opening out into a circumferential channel (2) at a block flank (11),
**characterized**
**in that** the peripheral portion (4a, 4c, 4'a, 4'c) is bounded by wall portions (14a, 14c, 14'a, 14'c), which have a wave form, the wave crest or crests and/or wave trough or troughs of which run in the axial direction and have an amplitude (a₁) that decreases, in particular vanishingly, in the axial direction, and consequently in the direction of the deeper portion (4b, 4'b).

2. Pneumatic vehicle tyre according to Claim 1, **characterized in that** the sipes (4, 4') cross through the profile blocks (1, 1') and have two peripheral portions (4a, 4c, 4'a, 4'c) of the same depth with wall portions (14a, 14c, 14'a, 14'c) of a wave form.

3. Pneumatic vehicle tyre according to Claim 1, **characterized in that** the sipes cross through the profile blocks and have two peripheral portions of different depths, the deeper peripheral portion being provided with wall portions of a wave form.

4. Pneumatic vehicle tyre according to one of Claims 1 to 3, **characterized in that** the amplitude (a₁) of the wave form at the block flank (11) bounding the circumferential channel (2) is 0.5 mm to 2 mm.

5. Pneumatic vehicle tyre according to one of Claims 1 to 4, **characterized in that** the wave length (1₁) of the wave form is 2 mm to 6 mm.

6. Pneumatic vehicle tyre according to one of Claims 1 to 5, **characterized in that** the wave form is formed over at least one wave length (1₁) and is a multiple of half a wave length (1₁).

7. Pneumatic vehicle tyre according to Claim 1, **characterized in that** the deeper sipe portion (4b, 4'b) is bounded by wall portions (14b, 14'b) that have a wave or zigzag form, the wave crest or crests and wave trough or troughs of which run in the radial direction.

8. Pneumatic vehicle tyre according to Claim 7, **characterized in that** the amplitude (a₂) of the wave or zigzag form decreases towards the base of the sipe portion (4b, 4'b), in particular in such a way that at the base of the sipe it is zero.

9. Pneumatic vehicle tyre according to Claim 7, **characterized in that** the amplitude (a₂) of the wave or zigzag form is constant between the upper side of the profile block and the base of the sipe portion (4b, 4'b).

10. Pneumatic vehicle tyre according to Claim 8 or 9, **characterized in that** the amplitude (a₂) of the wave form at the upper side of the profile block is 1.5 mm to 3.5 mm.

11. Pneumatic vehicle tyre according to Claim 8 or 9, **characterized in that** the wave length (1₂) of the wave form is 3 mm to 7 mm.

12. Pneumatic vehicle tyre according to one of Claims 7 to 11, **characterized in that** the wave form is formed over at least one wave length (l₂).

## Revendications

1. Pneumatique de véhicule, en particulier pour l'utilisation dans des conditions de conduite hivernales, comprenant une bande de roulement avec au moins une rangée de blocs profilés (1a, 1'a) s'étendant tout autour dans la direction périphérique et présentant des blocs profilés (1, 1'), laquelle est limitée par au moins une rainure périphérique (2) et dont les blocs profilés (1, 1') sont pourvus respectivement d'un nombre d'entailles (4) de plus faible largeur s'étendant au moins essentiellement dans la direction transversale de la bande de roulement, lesquelles entailles, considéré dans la direction axiale, présentent à chaque fois une portion (4b, 4'b) plus profonde dans la direction radiale et, raccordée à celle-ci, au moins une portion de bord (4a, 4c, 4'a, 4'c) débouchant au niveau d'un flanc de bloc (11) dans une rainure périphérique (2) et moins profonde dans la direction radiale,
**caractérisé en ce que**
la portion de bord (4a, 4c, 4'a, 4'c) est limitée par des portions de paroi (14a, 14c, 14'a, 14'c) qui présentent une forme ondulée dont le ou les sommets d'ondulations et/ou le ou les creux d'ondulations s'étendent dans la direction axiale et présentent une amplitude (a₁) diminuant, notamment jusqu'à zéro, dans la direction axiale et par conséquent la direction de la portion plus profonde (4b, 4'b).

2. Pneumatique de véhicule selon la revendication 1, **caractérisé en ce que** les entailles (4, 4') traversent les blocs profilés (1, 1') et présentent deux portions de bords de même profondeur (4a, 4c, 4'a, 4'c) avec des portions de paroi (14a, 14c, 14'a, 14'c) de forme ondulée.

3. Pneumatique de véhicule selon la revendication 1, **caractérisé en ce que** les entailles traversent les blocs profilés et présentent deux portions de bords de profondeurs différentes, la portion de bord plus profonde étant pourvue de portions de paroi de forme ondulée.

4. Pneumatique de véhicule selon l'une quelconque des revendications 1 à 3, **caractérisé en ce que** l'amplitude (a₁) de la forme ondulée au niveau du flanc de bloc (11) limitant la rainure périphérique (2) est comprise entre 0,5 mm et 2 mm.

5. Pneumatique de véhicule selon l'une quelconque des revendications 1 à 4, **caractérisé en ce que** la longueur d'onde (1₁) de la forme ondulée est comprise entre 2 mm et 6 mm.

6. Pneumatique de véhicule selon l'une quelconque des revendications 1 à 5, **caractérisé en ce que** la forme ondulée est réalisée sur au moins une longueur d'onde (1₁) et est un multiple d'une demi-longueur d'onde (l₁).

7. Pneumatique de véhicule selon la revendication 1, **caractérisé en ce que** la portion d'entaille plus profonde (4b, 4'b) est limitée par des portions de paroi (14b, 14'b) qui présentent une forme ondulée ou une forme en zigzag dont le ou les sommets d'ondulations et le ou les creux d'ondulations s'étendent dans la direction radiale.

8. Pneumatique de véhicule selon la revendication 7, **caractérisé en ce que** l'amplitude (a₂) de la forme ondulée ou en zigzag diminue jusqu'à la base de la portion d'entaille (4b, 4'b), notamment jusqu'à devenir nulle au niveau du fond de l'entaille.

9. Pneumatique de véhicule selon la revendication 7, **caractérisé en ce que** l'amplitude (a₂) de la forme ondulée ou en zigzag est constante entre le côté supérieur du bloc profilé et la base de la portion d'entaille (4b, 4'b).

10. Pneumatique de véhicule selon la revendication 8 ou 9, **caractérisé en ce que** l'amplitude (a₂) de la forme ondulée au niveau du côté supérieur du bloc profilé est comprise entre 1,5 mm et 3,5 mm.

11. Pneumatique de véhicule selon la revendication 8 ou 9, **caractérisé en ce que** la longueur d'onde (1₂) de la forme ondulée est comprise entre 3 mm et 7 mm.

12. Pneumatique de véhicule selon l'une quelconque des revendications 7 à 11, **caractérisé en ce que** la forme ondulée est réalisée sur au moins une longueur d'onde (l₂).
